# EUROPEAN PATENT APPLICATION

(11) **EP 1 657 122 A2**
(43) Date of publication of application: **17.05.2006**
(21) Application number: 05021294.3
(22) Date of filing: 29.09.2005
(51) Int. Cl.: B60R 21/16

(54) **Airbag apparatus**

(30) Priority: 16.11.2004 JP 2004331933; 16.11.2004 JP 2004331954
(71) Applicant: TAKATA CORPORATION, Minato-ku, Tokyo 106-8510 (JP)
(72) Inventor: Kurimoto, Takeshi, Minato-ku Tokyo 106-8510 (JP); Takedomi, Akifumi, Minato-ku Tokyo 106-8510 (JP); Hiraoka, Kenji, Minato-ku Tokyo 106-8510 (JP)
(74) Representative: Vossius & Partner

(57) **Abstract**

To provide a development technology of an airbag apparatus which can ensure protection of a head portion and a breast portion of a vehicle passenger in case of vehicle accident. The airbag apparatus for a vehicle is configured in such a manner that the internal pressure of a head chamber 120 of a deployed and inflated airbag 102 becomes higher than the internal pressure of the breast chamber 110 in case of vehicle accident (Fig. 1).

## Description

The present invention relates to an airbag apparatus to be mounted to a vehicle such as a motor vehicle and, more specifically, to a development technology of an airbag apparatus which is deployed and inflated in a passenger protecting area between a vehicle passenger and a vehicle side wall potion for protecting the head portion and the breast portion of the vehicle passenger in case of vehicle accident such as side collision or sideward rolling of the vehicle.

In the related art, there are proposed various types of airbag apparatus for protecting the head portion and the breast portion of a vehicle passenger from crashing a vehicle side wall portion such as a side window or a door in case of vehicle accident such as side collision or sideward rolling of a vehicle. For example, Patent Document 1 shown below discloses an airbag apparatus provided with two internal spaces, that is, a lower chamber for protecting the breast portion of the vehicle passenger and an upper chamber being communicated with the lower chamber for protecting the breast portion of the vehicle passenger in the airbag. The airbag apparatus disclosed in JP-A-10-297409 is configured in such a manner that the airbag is deployed and inflated entirely by supplying gas for deployment and inflation supplied from an inflator upon occurrence of vehicle accident first to the lower chamber on the upstream side of gas flow, and after having flowed in the lower chamber, supplying the gas to the upper chamber on the downstream side of gas flow.

In the airbag apparatus of this type intended for protecting the head portion and the breast portion of the vehicle passenger in case of vehicle accident, it is highly required to ensure protection of the vehicle passenger by deploying and inflating the airbag in an optimal mode corresponding to the respective objective portions of the vehicle passenger.
In view of such points, it is a subject of the present invention to provide a development technology of the airbag apparatus which can ensure protection of the head portion and the breast portion of the vehicle passenger in case of vehicle accident.

The present invention is intended to solve the above described problems. The present invention is a technology which can be applied to develop the airbag apparatus which provides effective protection of at least the head portion and the breast portion of the vehicle passenger by the airbag, in various types of vehicles, more typically in motor vehicles.

A first aspect of the present invention for solving the above-described problems is an airbag apparatus as stated in Claim 1.
The airbag apparatus stated in Claim 1 includes at least an airbag, a gas supply means, and pressure adjusting means. The airbag is adapted to be deployed and inflated in a passenger protecting area between a vehicle passenger and a vehicle side wall portion in case of vehicle accident. Gas for deployment and inflation is supplied to the airbag via a gas supply means having gas generating function. The term "vehicle side wall portion" in this specification widely includes a vehicle structure disposed like a wall surface on the (right or left) sides of the vehicle passenger, and typically, the vehicle side wall portion is constituted by a side window or a door trim or the like.

In particular, the airbag of the present invention includes at least a head chamber for protecting a head portion of the vehicle passenger, and a breast chamber for protecting the breast portion of the vehicle passenger. The respective chambers are formed into compartments defined by partitioning the internal space in the airbag. The present invention includes a structure in which only the space areas of the head chamber and the breast chamber are formed in the airbag, or a structure in which a space area other than the head chamber and the breast chamber is formed in the airbag in addition to the head chamber and the breast chamber.

The gas supply means of the present invention is configured as means having a function to supply gas for deployment and inflation in parallel to the head chamber and the breast chamber of the airbag. The term "supply in parallel" means a mode in which the gas for deployment and inflation is supplied to the head chamber and the breast chamber via a plurality of gas supply paths formed in parallel.

The pressure adjusting means of the present invention is configured as means having a function to adjust the internal pressure of the head chamber is higher than the internal pressure of the breast chamber at the time of deployment and inflation of the airbag. Therefore, by using the pressure adjusting means, the internal pressure of the head chamber is higher than the internal pressure of the breast chamber at the time of deployment and inflation of the airbag. The term "at the time of deployment and inflation" in the present invention includes timing from a beginning of deployment and inflation process to completion of inflation.
In this arrangement, the head portion of the vehicle passenger is protected by the head chamber the internal pressure of which is relatively higher among the respective portions of the airbag at the time of deployment and inflation, and the breast portion of the vehicle passenger is protected by the breast chamber the internal pressure of which is relatively lower at the time of deployment and inflation. Accordingly, the airbag can be deployed and inflated in an optimal mode corresponding to the respective portions to be protected of the vehicle passenger, whereby protection of the vehicle passenger can be ensured.

The structure of the pressure adjusting means of the present invention may employ various modes as needed. For example, the pressure adjusting means in the present invention may be configured by employing a structure in which gas of uniform pressure supplied from a single structure gas supply means is distributed and supplied in parallel to the head chamber and the breast chamber while adjusting the quantity of gas flow, a structure in which two different types of gas having different pressures supplied from a plurality of structures of gas supply means are distributed and supplied in parallel to the head chamber and the breast chamber respectively, and a structure in which the quantity of gas flow discharged from the interiors of the respective chambers to the outside of the chambers is adjusted by the vent hole or the like. In other words, the internal pressures of the respective chambers may be fixed based on the quantity of gas retained in the chambers according to a balance between gas flowing into the chambers and gas discharged from the chambers.

A second aspect of the present invention to solve the above-described problems is an airbag apparatus as stated in Claim 2.
According to the airbag stated in Claim 2, the pressure adjusting means stated in Claim 1 includes at least gas distributing means. The gas distributing means is configured as means having a function to distribute gas of a uniform pressure supplied from the single structure gas supply means in parallel to the head chamber and the breast chamber while adjusting the quantity of gas flow. By setting the quantity of gas flow to be supplied to the head chamber and the breast chamber as needed using the distribution means, the internal pressure of the head chamber can be adjusted to be higher than the internal pressure of the breast chamber at the time of deployment and inflation of the airbag. Typically, by adjusting the quantity of gas flow flowing into the head chamber becomes larger than that flowing into the breast chamber by the distribution means, the internal pressure of the head chamber becomes higher than the internal pressure of the breast chamber at the time of deployment and inflation of the airbag.
In this arrangement, by using the gas distribution means having a function to distribute and supply the gas of a uniform pressure supplied from the gas supply means of the single structure in parallel to the head chamber and the breast chamber while adjusting the quantity of gas flow, the gas supply means can be formed into a single structure and hence the structure is simplified.

A third aspect of the present invention for solving the above-described problem is an airbag apparatus as stated in Claim 3.
According to the airbag apparatus as stated in Claim 3, the pressure adjusting means stated Claim 2 includes a vent hole. The vent hole is formed on the airbag panel for allowing gas in the breast chamber to be discharged out of the chamber formed. The gas flowing into the breast chamber at the time of deployment and inflation of the airbag is discharged through this vent hole, whereby the vent hole can prevent the internal pressure in the breast chamber from excessively increased or the high-pressure state in the breast chamber from excessively continuing to be maintained.
In this arrangement, the internal pressures of the chambers can be adjusted further reliably by the use of the vent hole so that the internal pressure of the head chamber becomes higher than the internal pressure of the breast chamber at the time of deployment and inflation. In particular, by configuring the pressure adjusting means using both of the vent hole and the gas distribution means stated in Claim 2, adjustment of the internal pressure of the chamber can be achieved reliably and quickly.

A fourth aspect of the invention for solving the above-described problem is an airbag apparatus as stated in Claim 4.
According to the airbag apparatus stated in Claim 4, the airbag stated any one of Claims 1 to 3 is configured in such a manner that the gas sealing agent is applied to the inner wall surface of the airbag panel in order to restrict the gas in the head chamber from flowing out from the chamber. Air-tightness in the head chamber is enhanced by the gas sealing agent, so that the high-pressure state of the head chamber after deployment and inflation can be maintained. A typical application mode of the "gas sealing agent" in this specification includes a first mode in which a coating layer is formed entirely on the inner wall surfaces of the airbag panels, a second mode in which the sealing agent is applied along the seam in which the airbag panels are stitched together, and a third mode in which the first mode and the second mode are combined, with regard to the head chamber. Transmission of gas through the airbag panels in themselves is prevented by the first mode, and transmission of gas through the seam between the airbag panels is prevented by the second mode, and in particular, the both of the transmission of gas through the airbag panels in themselves and the transmission of gas through the seam are prevented by the third mode, whereby improvement of air-tightness is achieved with higher effectiveness by the cooperation of these modes.
In this arrangement, the gas in the head chamber is restricted from flowing out from the chamber by the gas sealing agent, whereby increase in internal pressure of the head chamber at the time of deployment and inflation is ensured.

A fifth aspect of the invention for solving the above-described problem is an airbag apparatus as stated in Claim 5.
According to the airbag apparatus stated in Claim 5, the head chamber of the airbag stated any one of Claims 1 to 4 includes a plurality of space areas requiring different period to increase the internal pressure to a predetermined high pressure. In other words, it is configured to be provided with a plurality of space areas which have different building-up capabilities.
In this arrangement, by partitioning the head chamber into a plurality of space areas having different building-up capabilities, the head chamber can be deployed and inflated by a desired mode as needed, and hence protection of , particularly, the head portion of the vehicle passenger can be ensured.

As described above, according to the present invention, with the configuration such that the internal pressure in the head chamber of the deployed and inflated airbag is adjusted to be higher than the internal pressure of the breast chamber, the airbag can be deployed and inflated in the optimal mode corresponding to the respective portion to be protected of the vehicle passenger, whereby the protection of the vehicle passenger in case of the vehicle accident is ensured.

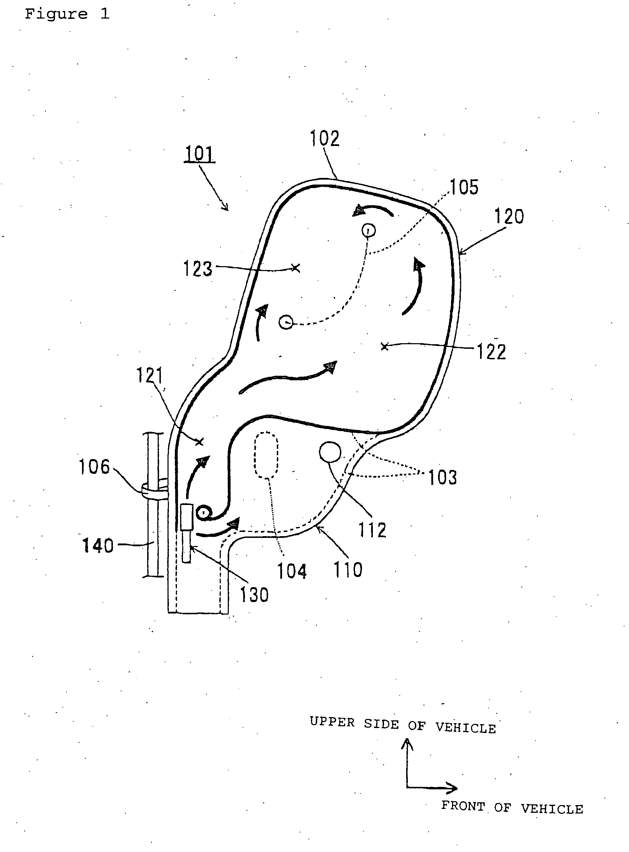

Fig. 1 is drawing showing a structure of the airbag apparatus 101 according to the present embodiment, in which a side view of a deployed and inflated airbag 102 is shown;
Fig. 2 is a perspective view showing a structure of a gas supply device 130 in Fig. 1;
Fig. 3 is a side view of the airbag 102 deployed and inflated for a vehicle passenger seated on the driver's seat S; and
Fig. 4 is a front view of the airbag 102 deployed and inflated for the vehicle passenger C on the driver's seat S.
   Referring now to Fig. 1 to Fig. 4, an airbag apparatus 101 according to an embodiment of the "airbag apparatus" of the present invention will be described. The airbag apparatus 101 of the present embodiment is the airbag apparatus to be mounted corresponding to a vehicle passenger seated on a driver's seat in a motor vehicle having a steering handle on the right side.

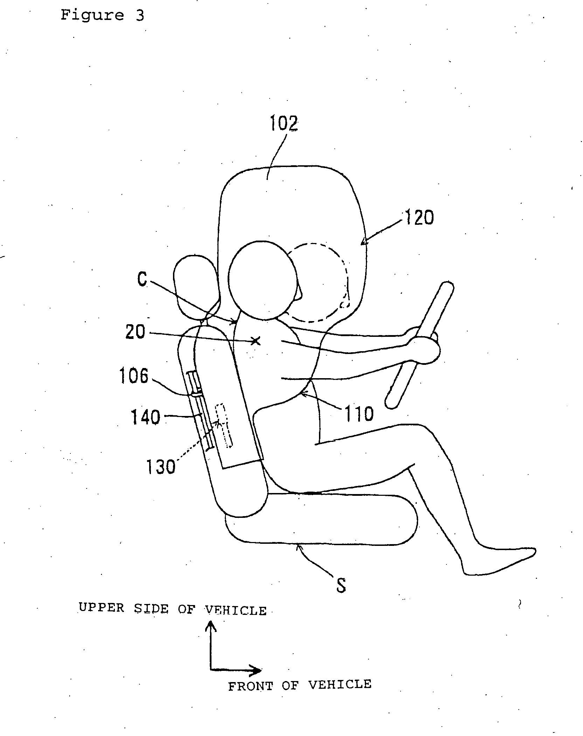

Fig. 1 is a drawing showing a structure of the airbag apparatus 101 according to the present embodiment, in which a side view of a deployed and inflated airbag 102 is shown. As shown in Fig. 1, the airbag apparatus 101 is mainly composed of an airbag 102 and a gas supply device 130. In the present embodiment, the airbag apparatus 101 is built in a side portion of a passenger seat (driver's seat S in Fig. 3). In Fig. 1, the airbag 102 is arranged so that the right side in the drawing is directed toward the front of the vehicle and the upper side in the drawing is directed upwardly of the vehicle.

The airbag 102 includes a breast chamber 110 disposed on the lower side of the vehicle so as to protect a breast portion of the vehicle passenger, and a head chamber 120 disposed on the upper side of the vehicle so as to protect a head portion of the vehicle passenger. The breast chamber 110 corresponds to the "breast chamber" in the present invention, and the head chamber 120 corresponds to the "head chamber" in the present invention. The breast chamber 110 and the head chamber 120 are partitioned from each other by stitching wall surfaces of opposing airbag panels directly together at seams 103. In the present embodiment, the capacity of the head chamber 120 is relatively larger than the capacity of the breast chamber 110. A portion shown by a thick solid line among respective members of the seams 103 in the drawing is a gas sealing agent applied portion on which the gas sealing agent (for example, a sealing agent using silicon material) is applied, whereby the gas sealing agent functions to prevent movement of gas between an interior and an exterior of the head chamber 120 and enhance the air-tightness in the head chamber 120. A coating layer is formed at least on the entire surface of the inner wall surface of the head chamber 120 among the respective chambers, and the coating layer functions to prevent movement of gas between an interior and an exterior of the head chamber 120 and enhance the gas air-tightness in the head chamber 120.
In this manner, in the head chamber 120 of the present embodiment, since prevention of transmission of gas through the seams 103 between the airbag panels is achieved by the gas sealing agent, and prevention of transmission of gas through the airbag panels in themselves is achieved by the coating layer, such a cooperative effect provides improvement of air tightness with higher effectiveness. The gas sealing agent and the coating layer constitutes the "gas sealing agent" in the present invention.
The airbag 102 is stored in the airbag apparatus 101 built in the seat side portion in a folded state in a predetermined folding mode such as accordion state in advance.

In the breast chamber 110, stitching is done at a seam 104 so that thickness of the chamber in the lateral direction at the time of deployment and inflation becomes the desired thickness (a chamber thickness d1 described later). In other words, in the breast chamber 110, the thickness of the chamber in the lateral direction at the time of deployment and inflation is adjusted by stitching at the seam 104 in which the wall surfaces of the opposing airbag panels are directly stitched together. The lateral direction of the breast chamber 110 corresponds to a normal vector direction of a passenger protection surface of the breast chamber 110 which faces the breast portion of the vehicle passenger in the deployed and inflated state.
The airbag panel of the breast chamber 110 is formed with a vent hole 112 having a function to allow to discharge the gas in the breast chamber 110 out from the chamber. The vent hole 112 corresponds the "vent hole" in the present invention. The diameter (size) of the vent hole 112 is set as needed based on the desired mode of deployment and inflation of the breast chamber (such as the period of gas retention or the gas pressure).

The head chamber 120 is provided with a first compartment 121, a second compartment 122, a third compartment 123 in sequence from an entrance side.

The first compartment 121 constitutes a gas flow path area for introducing gas into the head chamber 120. The first compartment 121 is disposed below the second compartment 122 and the third compartment 123 at the time of deployment and inflation, and also formed into a substantially cylindrical-shape extending longitudinally in the vertical direction. The first compartment 121 in this structure functions to support the second compartment 122 and the third compartment 123 firmly flow below, thereby ensuring the upright posture of the entire head chamber 120 at the time of deployment and inflation.

The second compartment 122 and the third compartment 123 are deployed and inflated by gas introduced through the first chamber 121, and constitutes a protection area for protecting the head portion of the vehicle passenger. The second compartment 122 and the third compartment 123 constitute a portion for achieving the substantial protective function for the head portion of the vehicle passenger right after occurrence of accident. There may be a case where either one of the second compartment 122 or the third compartment 123 achieves the substantial protective function for the head portion or a case where both of the second compartment 122 and the third compartment 123 achieve the substantial protective function for the head portion depending on the seated position of the vehicle passenger or the state of collision (oblique collision or the like). The second compartment 122 constitutes a space area lager than the third compartment 123 in capacity, and the second compartment 122 is adapted to be increased in pressure earlier than in the third compartment 123 since gas for deployment and inflation passed through the first compartment 121 flows directly into the second compartment 122. In other words, the period required for increasing the internal pressure to a predetermined high pressure is shorter for the second compartment 122 than for the third compartment 123, and hence a building-up capability is enhanced in the second compartment 122. The second compartment 122 and the third compartment 123 correspond to a "plurality of space areas requiring different periods to increase internal pressure to a predetermined high pressure". The second compartment 122 and the third compartment 123 are partitioned from each other by stitching the airbag panels at a portion corresponding to the head camber 120 at the seam 105. The head chamber 120 is adapted in such a manner that the chamber thickness in the lateral direction at a portion corresponding to the second compartment 122 and the third compartment 123 at the time of deployment and inflation becomes a desired thickness (chamber thickness d2 described later). The lateral direction of the head chamber 120 corresponds to a normal vector direction of a passenger protections surface of the head chamber 120 which faces the head portion of the vehicle passenger in the deployed and inflated state.

A strap 106 as a connecting band is connected to the airbag 102 having the structure as described above, and the strap 106 inserts supporting rod 140 extending in the vertical direction of the vehicle thereinto. Accordingly, the airbag 102 and the supporting rod 140 are connected via the strap 106. The supporting rod 140 allows movement the airbag 102 connected to the strap 106 in the vertical direction, and functions as a guide member which guides the airbag 102 upward at the time of deployment and inflation. The supporting rod 140 is fixed to the frame portion of a vehicle seat or a bolt portion of a retainer.

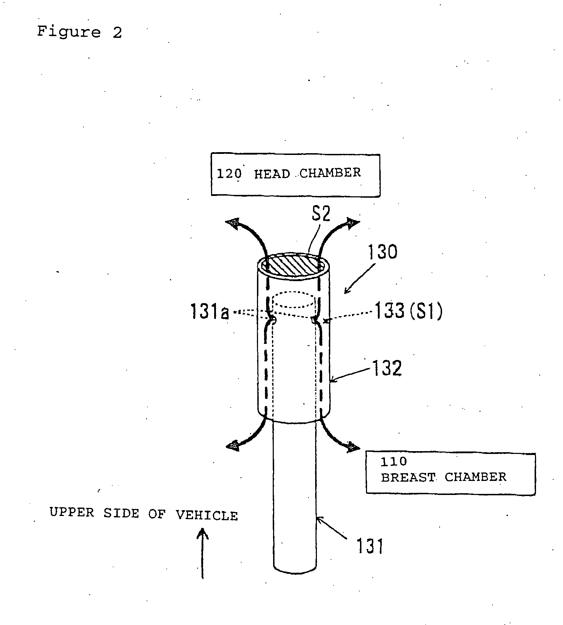

The gas supply device 130 has a structure which can generate gas for deployment and inflation and supply the gas to the inner space of the airbag 102. The gas supply device 130 is arranged in the airbag 102 longitudinally in the vertical direction near an entrance. A perspective view of the structure of the gas supply device 130 is shown in Fig. 2.

As shown in Fig. 2, the gas supply device 130 includes an inflator 131 of a single structure as a gas generating source for deployment and inflation and a cylindrical sleeve 132, and the sleeve 132 is arranged so as to cover a gas discharge portion 131a of the inflator 131. Accordingly, the inner peripheral portion of the sleeve 132 and the outer peripheral portion of the inflator 131 form a space 133 extending in the vertical direction therebetween. In this arrangement, gas of a uniform pressure discharged sideward from the gas discharge portion (discharge hole) 131a of the inflator 131 is distributed in parallel into the head chamber 120 on the upper side and the breast chamber 110 on the downstream side. At this time, the gas discharged from the gas discharge portion 131a hit against the inner peripheral surface of the sleeve 132, then partly flows upward in the space 133, and flows into the head chamber 120 side. On the other hand, the other gas flows downward in the space 133 and flows into the breast chamber 110 side. At this time, the sleeve 132 prevents generation of uneven gas flow by being affected by the deployment conditions of the airbag 102 (the folded state of the airbag, the mode of deployment of the cover, and so on), by forming a space 133 for allowing smooth gas flow between the sleeve 132 and the outer periphery of the inflator 131, thereby functioning to smoothen gas supply to the respective chambers.
In the present embodiment, a cross sectional area S2 of a flow path through which the gas moves toward the head chamber 120 side may be formed to be larger than a cross sectional area (a cross sectional area S1 of the space 133) of a flow path through which gas flow toward the breast chamber 110. Accordingly, the resistance of the flow path of the gas directed to the head chamber 120 can be reduced, whereby the quantity of gas flow flowing into the head chamber 120 side becomes larger than the quantity of gas flow flowing into the breast chamber 110.
In this manner, the gas supply device 130 of the present embodiment is a device for supplying gas for deployment and inflation in parallel to the breast chamber 110 and the head chamber 120, and constitute the "gas supply means" in this invention.

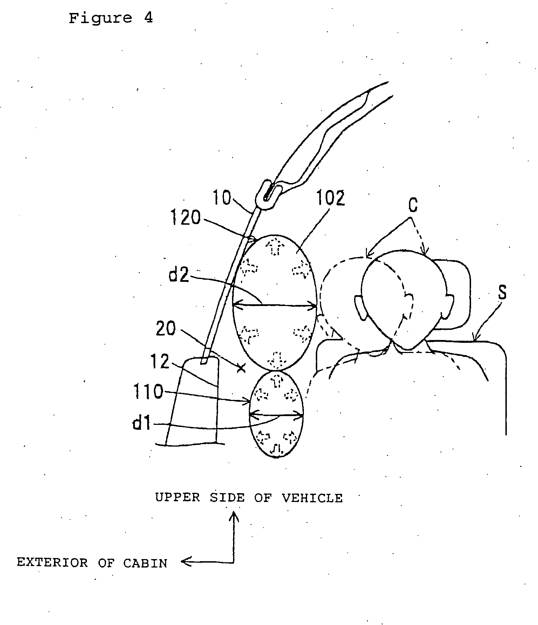

A state in which the airbag 102 is deployed and inflated in case of vehicle accident, such as side collision or sideward rolling of the vehicle, is shown in Fig. 3 and Fig. 4. Fig. 3 is a side view of the airbag 102 deployed and inflated for a vehicle passenger C seated on the driver's seat S, and Fig. 4 is a front view of the airbag deployed and inflated for the vehicle passenger C seated on the driver's seat S.

When the side collision or sideward rolling of the vehicle occurs, the gas supply device 130 is activated, and gas for deployment-and inflation is generated from the inflator 131. The gas is distributed to the head chamber 120 and the chest chamber 110 by the distribution effect of the sleeve 132 and supplied in parallel. In other words, the gas discharged from the gas discharge portion 131a of the inflator 131 is supplied to the head chamber 120 and the breast chamber 110 through separate routes. In association with it, the airbag 102 stored in the airbag apparatus 101 built in the driver's seat S in advance starts deployment and inflation action (action to be inflated while being deployed), and is deployed and inflated upward. At this time, the breast chamber 110 and the head chamber 120 of the airbag 102 are deployed and inflated respectively by gas flowing therein and the pressure therein is increased. At this time, at least when the passenger is constrained by the airbag 102, the airbag is inflated in such a manner that the chamber thickness d2 of the head chamber 120 in the lateral direction becomes larger than the chamber thickness d1 of the breast chamber 110 in the lateral direction.

The pressure in the breast chamber 110 is substantially uniformly increased in the entire chamber in a process of deployment and inflation. After the breast chamber 110 is completed the deployment and inflation, the chamber thickness of the breast chamber 110 in the lateral direction in Fig. 4 reaches the thickness d1, and then the gas pressure in the breast chamber 110 is lowered by discharging the gas to the outside of the breast chamber 110 through a vent hole 112.
On the other hand, the head chamber 120 is deployed and inflated and increased in pressure from the first compartment 121 disposed at the entrance of the chamber, the second compartment 122 and the third compartment 123 disposed on the upstream side thereof in sequence in the process of deployment and inflation thereof. At this time, the first compartment 121 is inflated into a substantially cylindrical shape extending longitudinally in the vertical direction, enabling to support the second compartment 122 and the third compartment 123 from below. Therefore, upright posture of the entire head chamber 129 in the vertical direction is ensured. Then, the chamber thickness of the head chamber 120 in the lateral direction in Fig. 4 with its deployment and inflation completed is a thickness d2 (>d1) at least when constraining the passenger. Then, since the period required for achieving a predetermined high pressure in the second compartment 122 is shorter than in the third compartment 123, the building-up capability of the second compartment 122 which achieves substantial protective functions of the head portion of the vehicle passenger right after occurrence of accident is enhanced, and hence the second compartment 122 can be deployed and inflated quickly.

In this manner, the,airbag 102 is deployed and inflated in the passenger protection area 20 on the side of the vehicle passenger C so as to protect at least the head portion and the breast portion of the vehicle passenger C as shown in Fig. 3 and Fig. 4. The passenger protection area 20 is a protection area defined between the vehicle side wall portion composed of the side window 10 or the door trim 12 or the like and the vehicle passenger C, and corresponds to the "passenger protection area" in the present invention.

Then, the vehicle passenger C crashed into the airbag 102 with its deployment and inflation completed is constrained by the airbag 102. At this time, after the vehicle passenger C has crashed into the airbag 102 with its deployment and inflation completed, the head chamber 120 is always maintained in a high-pressure state, which is higher than the pressure in the breast chamber 110. Also, the period in which the head chamber 120 is maintained in the high pressure state becomes longer than period in which the breast chamber 110 is. This is because of the gas discharging effect of the vent hole 112 in the breast chamber 110 and the gas sealing effect of the gas sealing agent and the coating layer in the head chamber 120, since the entire head chamber 120 is partitioned in a state in which the air tightness is enhanced by the gas sealing agent and the coating layer, and in addition, although the breast chamber 110 has the vent hole 112, the head chamber 120 does not have such a vent hole. The gas sealing agent, the coating layer, and the vent hole 112 function to adjust the internal pressure in the breast chamber 110 and the head chamber 120, and constitute the "pressure adjusting means" in the present invention.

. In the present embodiment, since the quantity of gas flow flowing into the head chamber 120 side is larger than that flowing into the breast chamber 110 side, at least upon completion of the deployment and inflation of the airbag, the pressure in the head chamber 120 is increased higher than the pressure in the breast chamber 110. In other words, the sleeve 132 of the gas supply device 130 of the present embodiment function to increase the internal pressure in the head chamber 120 higher than the internal pressure of the breast chamber 110 by distributing the gas at a uniform pressure supplied from the inflator 131 in parallel to the breast chamber 110 and the head chamber 120 while adjusting the quantity of gas flow, and the sleeve 132 constitutes the "pressure adjusting means" and the "gas distribution means" in the present invention.

As described above, according to the present embodiment, the internal pressure in the head chamber 120 of the deployed and inflated airbag 102 is configured to be higher than the internal pressure in the breast chamber 110 in case of occurrence of vehicle accident, whereby the airbag 102 can be deployed and inflated in the optimal mode for the head portion and the breast portion of the vehicle passenger C for constraining the vehicle passenger 102. Accordingly, protection of at least the head portion and the breast portion of the vehicle passenger is achieved.
According to the present embodiment, the sleeve 132 is employed for distributing the gas in such a manner the quantity of gas flow flowing into the head chamber side is larger than that flowing into the breast chamber side in order to make the internal pressure in the head chamber 120 higher than the internal pressure in the breast chamber 110. Therefore the inflator 131 may be formed into a single structure, and hence the structure can be simplified.
According to the present embodiment, by employing the gas sealing agent or the bent hole 112 in addition to the gas distribution function of the sleeve 132, adjustment of internal pressure of the chamber is further ensured. At this time, by increasing the air-tightness of the head chamber 120 specifically out of the respective portions of the airbag 102 by the use of the gas sealing agent and the coating layer, the high-pressure state of the head chamber 120 after deployment and inflation can be maintained, whereby protection of, particularly, the head portion of the vehicle passenger is ensured. Also, the vent hole 112 can prevent the internal pressure in the breast chamber 110 from excessively increased or the high-pressure state in the breast chamber 110 from being excessively continued to be maintained, whereby protection of, particularly, the breast portion of the vehicle passenger is ensured.
In addition, in the present embodiment, by partitioning the head chambers 120 into a plurality of space areas having different building-up capabilities, the second compartment 122 and the third compartment 123, the head chamber 120 can be deployed and inflated by a desired mode as needed, and hence protection of the head portion of the vehicle passenger can be further ensured.

### (Another Embodiment)

The present invention is not limited to the above-described embodiment, and various applications or modifications may be made. For example, respective modes shown below in which the above described embodiment may be implemented.

In the above-described embodiment, the case in which the gas of a uniform pressure supplied from the inflator 131 of a single structure is distributed to the breast chamber 110 and the head chamber 120 while adjusting the quantity of gas flow by the sleeve 132 has been described. However, the present invention may be configured in such a manner that the two different types of gas having different pressures supplied from the inflator having a plurality of structures are distributed to the breast chamber 110 and the head chamber 120 respectively.

The above described embodiment describes the gas sealing agent and the coating layer for restricting the gas in the head chamber 120 from flowing outside of the chamber are applied on the inner wall surface of the airbag panel of the airbag 102, and the vent hole 112 for allowing the gas in the breast chamber 110 to be discharged out from the chamber is provided. However, in the present invention, the gas sealing agent, the coating layer and the vent hole 112 may be omitted as needed. In the present invention, regarding to the application of the gas sealing agent in the head chamber 120, at least one of the gas sealing agent applied to the seam 103 between the airbag panels and the coating layer applied on the entire surface of the inner wall surface of the airbag panels may be omitted as needed.

Also, in the above-described embodiment the airbag apparatus 101 built in the passenger seat has been described. However, the airbag apparatus of the present invention may have a structure which is built in a portion other than the passenger seat, for example, the trim of the vehicle body, a pillar, or a roof rail.

In the above described embodiment, the airbag apparatus 101 which is worn by the vehicle passenger to be seated on the driver's seat of the vehicle. However, the present invention may be applied to a structure of the airbag apparatus which is worn by the vehicle passenger seated on other than the driver's seat such as a passenger seat or the rear seat may be applied.

## Claims

1. An airbag apparatus comprising:
an airbag to be deployed and inflated in a passenger protection area between a vehicle passenger and a vehicle side wall portion in case of vehicle accident,
a head chamber for protecting a head portion of a vehicle passenger and a breast chamber for protecting a breast portion of the same of the respective portions of the airbag;
a gas supply means for supplying gas for deployment and inflation to the head chamber and the breast chamber in parallel;
pressure adjusting means for adjusting the internal pressure of the head chamber to be higher than the internal pressure of the breast chamber at the time of deployment and inflation of the airbag.

2. The airbag apparatus according to Claim 1, **characterized in that** the pressure adjusting means includes a gas distribution means for distributing and supplying gas of a uniform pressure supplied from the gas supply means of a single structure in parallel to the head chamber and the breast chamber while adjusting the quantity of gas flow.

3. The airbag apparatus according to Claim 1 or 2, **characterized in that** the pressure adjusting means includes a vent hole formed on an airbag panel for allowing the gas in the breast chamber to be discharged out of the chamber.

4. The airbag apparatus according to any one of Claim 1 to 3, **characterized in that** the airbag has a configuration in which the gas sealing agent is applied to the inner wall surface of the airbag panel in order to restrict the gas in the head chamber from flowing out from the chamber.

5. The airbag apparatus according to any one of Claims 1 to 4, **characterized in that** the head chamber includes a plurality of space areas requiring different period to increase the internal pressure to a predetermined high pressure.
